# EUROPEAN PATENT APPLICATION

(11) **EP 4 715 459 A1**
(43) Date of publication of application: **25.03.2026**
(21) Application number: 24910845.7
(22) Date of filing: 17.12.2024
(51) Int. Cl.: G02F 1/13357, G02B 5/02

(54) **OPTICAL STRUCTURE, BACKLIGHT MODULE, DISPLAY APPARATUS, AND PREPARATION METHOD FOR OPTICAL STRUCTURE**

(30) Priority: 27.12.2023 CN 202311833701
(71) Applicant: Shenzhen Skyworth Display Technologies Co., Ltd, Shenzhen, Guangdong 518000 (CN)
(72) Inventor: LI, Jianhui, Shenzhen, Guangdong 518000 (CN); YU, Sihui, Shenzhen, Guangdong 518000 (CN); LIU, Xin, Shenzhen, Guangdong 518000 (CN); ZHANG, Shuangshuang, Shenzhen, Guangdong 518000 (CN); ZHOU, Rui, Shenzhen, Guangdong 518000 (CN); HOU, Yarong, Shenzhen, Guangdong 518000 (CN)
(74) Representative: Osterhoff, Utz
(86) International application number: PCT/CN2024/140012
(87) International publication number: WO 2025/139914

(57) **Abstract**

The present application provides an optical structure, a backlight module, a display device, and a method for preparing the optical structure. The optical structure includes a substrate layer, a brightness enhancement layer, and a diffuser layer. the substrate layer, the brightness enhancement layer, and the diffuser layer are of the same basic material and are integrally injection-molded.

## Description

The present application claims priority to Chinese Patent Application No. 202311833701.9, filed on December 27, 2023. The disclosures of the above-mentioned applications are incorporated herein by reference in their entireties.

### TECHNICAL FIELD

The present application relates to the technical field of backlight modules, and in particular to an optical structure, a backlight module, a display device, and a method for preparing the optical structure.

### BACKGROUND

In traditional direct-lit backlight modules, the diffusion plate and the light-enhancing film, diffusion film and other films are stacked together in a separate stacking manner. Since there is a large movable space between the diffusion plate and the film, the separately stacked diffusion plate and film will scratch the polarizer under the liquid crystal display (LCD) panel, thus affecting the quality rate of the backlight module.

Therefore, the existing backlight module uses optical adhesive to bond the diaphragm and the diffuser together to effectively improve the scratch problem. However, due to the different basic materials of the diaphragm and the diffuser, the thermal expansion coefficients of the two differ by several times. In high temperature or extremely cold environments, the existing backlight module is prone to warping, deformation, and delamination.

### SUMMARY

The main purpose of the present application is to provide an optical structure, which aims to solve the problem that when the diaphragm and the diffuser are bonded by optical adhesive, warping, deformation and delamination may easily occur due to the different basic materials of the diaphragm and the diffuser.

To achieve the above-mentioned purpose, the optical structure provided by the present application is applied to a backlight module, and the optical structure includes:
a substrate layer;
a brightness enhancement layer; and
a diffuser layer;
an air gap is provided between the substrate layer and the brightness enhancement layer, and between the brightness enhancement layer and the diffuser layer; the substrate layer, the brightness enhancement layer and the diffuser layer are made of same basic material and are integrally injection-molded.

In an embodiment, the basic material is polystyrene (PS) material, polycarbonate (PC) material, polyacrylate organic-inorganic nanocomposite (MS) material or polymethyl methacrylate (PMMA) material.

In an embodiment, the optical structure includes the substrate layer, the brightness enhancement layer, and the diffuser layer in order from a light incident surface to a light exit surface, and the air gap of 0.2 mm is provided between the substrate layer and the brightness enhancement layer, and between the brightness enhancement layer and the diffuser layer.

In an embodiment, a multi-layer non-continuous bubble structure is provided in the substrate layer, and a refractive index of the substrate layer is 1.5 to 1.6.

In an embodiment, the substrate layer is a transparent structure, and a thickness of the substrate layer is between 0.5 mm and 1.0 mm.

In an embodiment, the brightness enhancement layer is a transparent layer; a light incident surface of the brightness enhancement layer is smooth; and a light exit surface of the brightness enhancement layer is set to a triangular prism structure.

In an embodiment, a thickness of the brightness enhancement layer is between 0.2 mm and 0.5 mm.

In an embodiment, the diffuser layer is a semi-transparent plate, and the basic material of the diffuser layer is doped with a light diffusing agent.

In an embodiment, the diffusing agent includes SiO2 and TiO2, and a mass ratio of the diffusing agent is 1% to 5%.

In an embodiment, a thickness of the diffuser layer is between 0.2 mm and 0.5 mm.

In an embodiment, the substrate layer and the brightness enhancement layer both include a fixing portion and a protruding portion; the protruding portion is provided to protrude relative to the fixing portion, and two adjacent protruding portions are adhered to each other.

In an embodiment, the protruding portion is provided at both sides or around the fixing portion, and the air gap is located between two adjacent fixing layers.

The present application also provides a backlight module, including: the optical structure.

The present application also provides a display device, including: the optical structure.

The present application also provides a method for preparing an optical structure, applied to preparing the optical structure, including:
heating and melting raw materials containing the basic material;
injecting molten raw materials into a mold; the raw materials flow out from multiple injection ports of the mold from bottom to top, and a substrate layer, a brightness enhancement layer and a diffuser layer layer are injection-molded layer by layer in a cavity of the mold; the substrate layer, the brightness enhancement layer and the diffuser layer in the mold are mutually adhered and integrally molded in a molten state to form an optical functional board;
under a condition that the substrate layer is injection-molded, a foaming agent is added to foam the substrate layer, and the foamed substrate layer is cooled;
under a condition that the substrate layer is in the molten state, the brightness enhancement layer is injection-molded; a triangular prism structure is transferred to the injection-molded brightness enhancement layer, and the brightness enhancement layer after the triangular prism structure being transferred is cooled;
under a condition that the brightness enhancement layer is in the molten state, a diffusion agent is doped on the molten raw materials, and the diffuser layer is injection-molded;
cutting and trimming the optical functional plate to form the optical structure.

The technical solution of the present application adopts the same basic material for the substrate layer, the brightness enhancement layer and the diffuser layer and is integrally injection-molded. Since the substrate layer, the brightness enhancement layer and the diffuser layer are all integrally injection-molded and the substrate layer, the brightness enhancement layer and the diffuser layer are made of the same basic material, the surrounding edge regions of the substrate layer, the brightness enhancement layer and the diffuser layer are mutually adhered to each other in the molten state due to similar dissolution during the injection-molding process. The mutually adhered optical structure is not easy to shift and move, and the optical structure has a small range of movement in the backlight module, so as to reduce the substrate layer, the brightness enhancement layer and the diffuser layer in the optical structure from moving and scratching the polarizer under the liquid crystal panel; since the basic material is the same, the thermal expansion coefficients of the substrate layer, the brightness enhancement layer and the diffuser layer are small, and in a high temperature or extremely cold environment, the substrate layer and the brightness enhancement layer, and the brightness enhancement layer and the diffuser layer of the optical structure are not prone to warping, deformation or delamination.

### BRIEF DESCRIPTION OF THE DRAWINGS

In order to more clearly illustrate the embodiments of the present application or the technical solutions in the related art, the following briefly introduces the drawings required for use in the embodiments or the description of the related art. Obviously, the drawings described below are only some embodiments of the present application. For those skilled in the art, other drawings can be obtained based on the structures shown in these drawings without paying any creative work.
FIG. 1 is a schematic structural diagram of a conventional direct-type backlight module.
FIG. 2 is a schematic structural diagram of an optical functional board of an existing backlight module.
FIG. 3 is a schematic structural diagram of an optical structure according to an embodiment of the present application.
FIG. 4 is a schematic diagram of a three-dimensional structure of the optical structure according to an embodiment of the present application.
FIG. 5 is a schematic structural diagram of a backlight module according to an embodiment of the present application.
FIG. 6 is a cross-sectional diagram of a cavity in a mold according to an embodiment of the present application.

### Description of reference signs:

| reference signs | name | reference signs | name |
|---|---|---|---|
| 10 | optical structure | 30 | back plate |
| 11 | substrate layer | 40 | liquid crystal panel |
| 12 | brightness enhancement layer | 500 | mold |
| 120 | triangular prism structure | 50 | cavity |
| 13 | diffuser layer | 51 | injection port |
| 14 | air gap | 511 | first injection port |
| 15 | fixing portion | 512 | second injection port |
| 16 | protruding portion | 513 | third injection port |
| 17 | adhesive | 521 | first molding groove |
| 18 | optical adhesive | 522 | second molding groove |
| 100 | backlight module | 523 | third molding groove |
| 20 | backlight source | 53 | mold core |

The purpose, functional features and advantages of the present application will be further explained in conjunction with the embodiments and with reference to the accompanying drawings.

### DETAILED DESCRIPTION OF THE EMBODIMENTS

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by those skilled in the art without creative work are within the protection scope of the present application.

It should be noted that all directional indications in the embodiments of the present application (such as up, down, left, right, front, back, etc.) are only used to explain the relative position relationship, movement status, etc. between the components under a certain specific posture (as shown in the accompanying drawings). If the specific posture changes, the directional indication will also change accordingly.

In the present application, unless otherwise clearly specified and limited, the terms "connection", "fixation", etc. should be understood in a broad sense. For example, "fixation" can be a fixed connection, a detachable connection, or an integral connection; it can be a mechanical connection or an electrical connection; it can be a direct connection or an indirect connection through an intermediate medium; it can be the internal connection of two elements or the interaction relationship between two elements, unless otherwise clearly defined. For those skilled in the art, the specific meanings of the above terms in the present application can be understood according to specific circumstances.

In addition, in the present application, descriptions such as "first", "second", etc. are only used for descriptive purposes and cannot be understood as indicating or implying their relative importance or implicitly indicating the number of technical features indicated. Therefore, the features defined as "first" and "second" may explicitly or implicitly include at least one of the features. In addition, the meaning of "and/or" appearing in the full text is to include three parallel solutions. Taking "A and/or B as an example", it includes solution A, or solution B, or a solution that satisfies both A and B. In addition, the technical solutions between the various embodiments can be combined with each other, but it must be based on the ability of those skilled in the art to implement. When the combination of technical solutions is contradictory or cannot be implemented, it should be deemed that such combination of technical solutions does not exist and is not within the protection scope required by the present application.

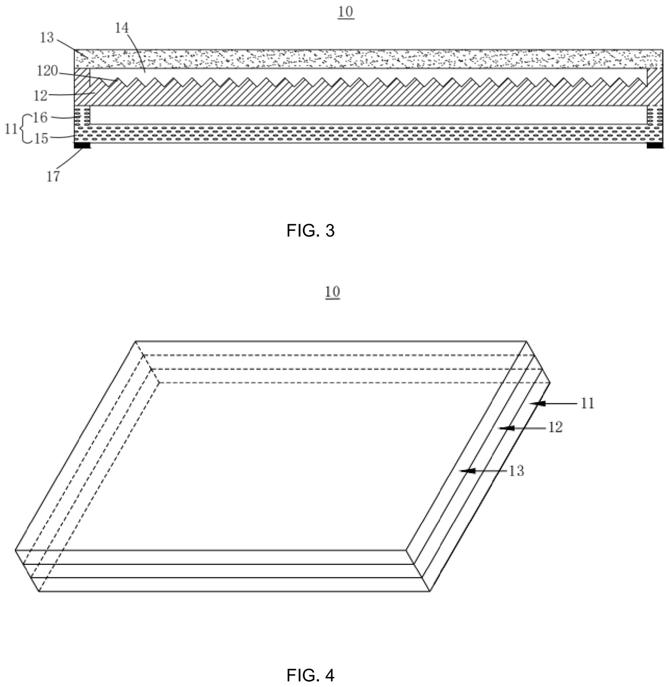

In the embodiment of the present application, as shown in FIGS. 3 to 5, the optical structure 10 is applied to the backlight module 100, and the optical structure 10 includes a substrate layer, a brightness enhancement layer 12 and a diffuser layer 13. An air gap 14 is provided between the substrate layer 11 and the brightness enhancement layer 12, and between the brightness enhancement layer 12 and the diffuser layer 13. The basic materials of the substrate layer 11, the brightness enhancement layer 12 and the diffuser layer 13 are the same and are integrally injection-molded.

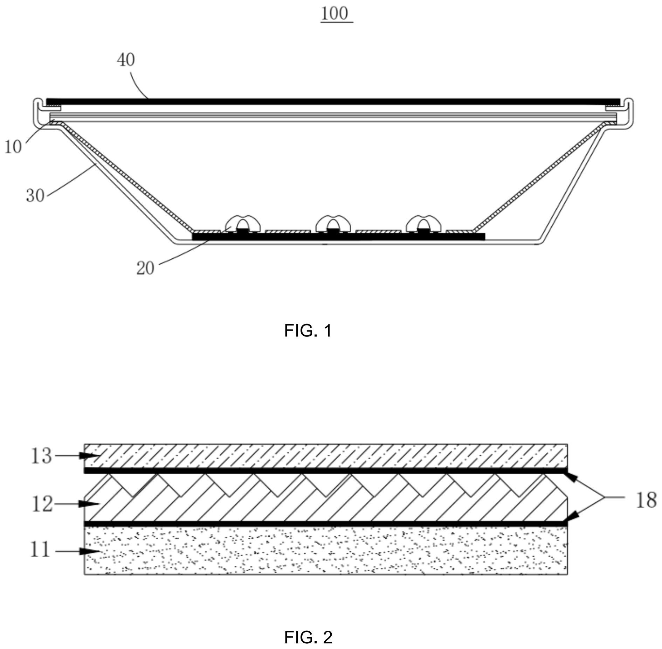

As shown in FIG. 1, FIG. 1 is a schematic structural diagram of a conventional direct-type backlight module 100. The conventional direct-type backlight module includes a backlight source 20, a back plate 30, a liquid crystal panel 40 and an optical structure 10. The liquid crystal panel 40 and the optical structure 10 are both mounted on the back plate 30 and are located above the backlight source 20. Among them, the optical structure 10 is provided below the liquid crystal panel 40. The optical structure 10 in the conventional direct-type backlight module 100 is stacked together by a diffusion plate and a light-enhancing film, a diffuser film and other films in a split stacking manner. The movable space between the diffusion plate and the film is large. The separately stacked diffusion plate and the film will scratch the polarizer under the liquid crystal panel, thereby affecting the quality rate of the backlight module.

The optical structure of the existing backlight module is shown in FIG. 2. In order to solve the problem that the polarizer under the liquid crystal panel is easily scratched in the traditional direct-type backlight module, the two layers of film and the diffuser of the optical structure on the existing backlight module are bonded together by optical adhesive. However, because the basic material of the two layers of film is different from that of the diffuser, the thermal expansion coefficients of the two are several times different. In a high temperature or extremely cold environment, the existing backlight module is very prone to warping, deformation, and delamination.

To this end, as shown in FIG. 3, the technical solution of the present application adopts the same basic material for the substrate layer 11 , the brightness enhancement layer 12 and the diffuser layer 13 and is integrally injection-molded. Since the substrate layer 11, the brightness enhancement layer 12 and the diffuser layer 13 are all formed by integral injection-molding, and the substrate layer 11, the brightness enhancement layer 12 and the diffuser layer 13 are made of the same basic material, during the injection-molding process, the peripheral edge regions of the substrate layer 11, the brightness enhancement layer 12 and the diffuser layer 13 are adhered to each other due to similar dissolution in the molten state, and the mutually adhered optical structure 10 is not easy to deviate and move; the optical structure 10 has a small range of movement in the backlight module 100, so as to reduce the substrate layer 11, the brightness enhancement layer 12 and the diffuser layer 13 in the optical structure 10 from moving and scratching the polarizer under the liquid crystal panel; because the basic material is the same, the thermal expansion coefficients of the substrate layer 11, the brightness enhancement layer 12 and the diffuser layer 13 are slightly different, and in a high temperature or extremely cold environment, the substrate layer 11 and the brightness enhancement layer 12 of the optical structure 10, and the brightness enhancement layer 12 and the diffuser layer 13 are not easy to warp, deform or delaminate.

In an embodiment, the substrate layer 11, the brightness enhancement layer 12 and the diffuser layer 13 of the optical structure 10 are made of the same basic material and are integrally injection-molded. Since the substrate layer 11, the brightness enhancement layer 12 and the diffuser layer 13 are similar and soluble in each other in the molten state, no adhesive is required for bonding, thereby reducing the use of adhesives and saving materials.

The basic material refers to the material that can be used to make the substrate layer 11, the brightness enhancement layer 12 or the diffuser layer 13. The basic material can also be referred to as the basic material.

In addition, because the diaphragm and the diffusion plate on the existing backlight module 100 are bonded by optical adhesive 18, the light emitted by the backlight source of the backlight module 100 is incident on the diaphragm, and needs to pass through the optical adhesive 18 when crossing the layer to the diffusion plate, resulting in light energy loss. In order to avoid light energy loss, the substrate layer 11, the brightness enhancement layer 12 and the diffuser layer 13 of the optical structure 10 of the present application are integrally injection-molded, and the substrate layer 11, the brightness enhancement layer 12 and the diffuser layer 13 are adhered to each other, without requiring optical adhesive 18. In addition, there is an air gap 14 between the substrate layer 11 and the brightness enhancement layer 12, and between the brightness enhancement layer 12 and the diffuser layer 13. The light from the backlight source on the backlight module 100 is incident on the optical structure 10, and the incident light has less light energy loss when crossing from the substrate layer to the brightness enhancement layer and from the brightness enhancement layer to the diffuser layer, thereby greatly improving the luminous efficiency of the backlight module 100.

In an embodiment, the basic material is PS material, PC material, MS material or PMMA material.

In order to make the expansion systems of the substrate layer 11, the brightness enhancement layer 12 and the diffuser layer 13 the same, the substrate layer 11, the brightness enhancement layer 12 and the diffuser layer 13 use the same basic material. One of the polystyrene (PS), polycarbonate (PC), polyacrylate organic-inorganic nanocomposite material (MS) or polymethyl methacrylate (PMMA) can be used as the basic material of the substrate layer 11, the brightness enhancement layer 12 and the diffuser layer 13.

In an embodiment, the basic material used for the substrate layer 11, the brightness enhancement layer 12 and the diffuser layer 13 can be PS material to ensure the consistency of the expansion coefficient and the contraction coefficient of the substrate layer, the brightness enhancement layer and the diffuser layer, so that in a high temperature or extremely cold environment, the optical structure 10 is not prone to warping, deformation and delamination between the substrate layer 11 and the brightness enhancement layer 12, and between the brightness enhancement layer 12 and the diffuser layer 13. Specifically, because the diffusion plate on the existing optical structure 10 is made of PS material, and the other film layers are made of PET material, the expansion coefficient of the PS material used for the diffusion plate is about 8×10-6/°C; the expansion coefficient of the PET material used for the other films is about 80×10-6/°C; the expansion coefficients of the two differ by 10 times. When this mechanical pasting method encounters extreme environments such as high temperature, high humidity and low temperature, the film layer will form a relatively serious warping and bulging. The substrate layer, brightness enhancement layer and diffuser layer of the optical structure 10 of the present application include a substrate layer 11, a brightness enhancement layer 12 and a diffuser layer 13. The basic materials of the substrate layer 11, the brightness enhancement layer 12 and the diffuser layer 13 of the present application are all made of PS material. The expansion coefficient and the contraction coefficient of the substrate layer 11, the brightness enhancement layer 12 and the diffuser layer 13 are consistent. In a high temperature or extremely cold environment, the substrate layer, the brightness enhancement layer and the diffuser layer are not prone to warping, deformation and delamination. Among them, the basic materials of the substrate layer 11, the brightness enhancement layer 12 and the diffuser layer 13 of the optical structure 10 in the present application can also be made of PC material. The basic materials of the substrate layer 11, the brightness enhancement layer 12 and the diffuser layer 13 of the optical structure 10 of the present application can also be made of MS material. Or the basic materials of the substrate layer 11, the brightness enhancement layer 12 and the diffuser layer 13 of the optical structure 10 of the present application can also be made of PMMA material. It should be noted that the basic materials of the substrate layer 11 , the brightness enhancement layer 12 and the diffuser layer 13 cannot be mixed, and the same material must be used to ensure that the expansion systems of the substrate layer 11 , the brightness enhancement layer 12 and the diffuser layer 13 are the same.

As shown in FIG. 3 and FIG. 4, the optical structure 10 includes a substrate layer 11, a brightness enhancement layer 12, and a diffuser layer 13 from the light incident surface to the light exit surface; an air gap 14 of about 0.2 mm is provided between the substrate layer 11 and the brightness enhancement layer 12, and between the brightness enhancement layer 12 and the diffuser layer 13.

As shown in FIG. 3, the substrate layer 11 has a multi-layer discontinuous bubble structure inside, and the refractive index of the substrate layer 11 is 1.5 to 1.6.

In an embodiment, the substrate layer 11 is transparent and has a multi-layer, non-continuous bubble structure inside. The refractive index of the substrate layer 11 is 1.5 to 1.6, and the refractive index of air is 1. The huge difference in refractive index can make the incident light energy fully refracted and reflected inside the substrate layer to form uniform scattered light energy. Among them, the thickness H1 of the substrate layer 11 ranges from 0.5mm to 1.0mm. If the thickness H1 value of the substrate layer 11 is too small, the substrate layer 11 will be too thin and easy to deform and break; if the thickness H1 value of the substrate layer 11 is too large, the substrate layer 11 will be too thick, which will increase the cost of the optical structure 10. Therefore, the thickness H1 range of the substrate layer 11 is set between 0.5mm and 1.0mm.

As shown in FIG. 3, the brightness enhancement layer 12 is a transparent layer; the light incident surface of the brightness enhancement layer 12 is smooth, and the light exit surface of the brightness enhancement layer 12 is set to a triangular prism structure 120.

In an embodiment, the brightness enhancement layer is transparent. The side of the fixing portion 15 of the brightness enhancement layer 12 facing away from the substrate layer is the light exit surface, and the light exit surface of the brightness enhancement layer 12 is set to a triangular prism structure 120. The triangular prism structure 120 is transfer-molded on the light exit surface of the brightness enhancement layer using a mold 500. Among them, the triangular prism structure 120 has a plurality of triangular prisms, each of which has a cross-section of an isosceles right triangle. The vertex angle of the cross-section of the triangular prism is 90°±2°, and the arrangement spacing of the plurality of triangular prisms is 50µm to 90µm. The triangular prism structure 120 can concentrate the light energy incident on the brightness enhancement layer in a spatial range of a solid angle of about 70°, has a focusing effect, and a gain coefficient of 110% to 115%. Among them, the thickness H2 of the brightness enhancement layer 12 is set in the range of 0.2mm to 0.5mm.

In an embodiment, the diffuser layer is a semi-transparent plate, and a light diffusing agent is doped into the basic material of the diffuser layer.

In an embodiment, the diffuser layer 1313 is formed by uniformly doping a diffusing agent with a basic material and then injection-molding. Generally, the diffusing agent is mostly SiO₂, TiO₂ and other particles, and TiO₂ is generally preferred. The mass ratio of the diffusing agent is 1% to 5%; by utilizing the difference in refractive index between the basic material and the diffusing agent, the light incident on the diffuser layer 13 can be fully refracted and reflected, which can optimize the viewing angle, glare and other issues. Among them, the thickness H3 of the diffuser layer 13 is set in the range of 0.2mm to 0.5mm.

As shown in FIGS. 3 to 5, in order to make the substrate layer 11, the brightness enhancement layer 12 and the diffuser layer 13 adhere to each other, the substrate layer 11 and the brightness enhancement layer 12 each include a fixing portion 15 and a protruding portion 16; the protruding portion 16 is protruded relative to the fixing portion 15, and two adjacent protruding portions 16 adhere to each other.

In an embodiment, the protruding portion 16 of the substrate layer 11 is used to adhere to the bottom of the protruding portion 16 of the brightness enhancement layer 12. The protruding portion 16 of the brightness enhancement layer 12 is used to adhere to the bottom of the diffuser layer 13.

In an embodiment, the protruding portion 16 provided at the substrate layer 11 and the brightness enhancement layer 12 is provided to protrude relative to the fixing portion 15. During the injection-molding process of the optical structure 10, the substrate layer 11 and the brightness enhancement layer 12 in a molten state have strong adhesive, and because the substrate layer 11, the brightness enhancement layer 12 and the diffuser layer are all made of the same basic material, the adjacent substrate layers 11 and the brightness enhancement layer 12 will adhere to each other due to similar dissolution; similarly, the adjacent brightness enhancement layer 12 and the diffuser layer 13 will also adhere to each other due to similar dissolution. Specifically, the substrate layer 11 is adhered to the bottom of the brightness enhancement layer 12 through the protruding portion 16, and the other side of the brightness enhancement layer 12 is adhered to the bottom of the diffuser layer through the protruding portion 16.

In another embodiment, adhesive may be added to the protruding portion 16 of the substrate layer 11 to stabilize the bonding between the adjacent substrate layer 11 and the brightness enhancement layer 12. Adhesive may also be added to the protruding portion 16 of the brightness enhancement layer 12 to stabilize the bonding between the adjacent brightness enhancement layer 12 and the diffuser layer 13.

In order to prevent the sticky protruding portions 16 from affecting the crosslayer transmission of incident light, the protruding portions 16 are provided at both sides or around the fixing portion 15, and the air gap 14 is located between two adjacent fixing layers.

In an embodiment, the substrate layer 11, the brightness enhancement layer 12 and the diffuser layer 13 are all configured as layer structures. The protruding portion 16 of each layer structure is a non-effective display area, and the two adjacent layers of the layer structure are adhered to each other through the protruding portion 16. The fixing portion 15 of each layer structure is an effective display area, and the incident light is incident on the fixing portion 15 of each layer structure. There is an air gap 14 between the fixing portions 15 of the two adjacent layers of the layer structure, so that the incident light has less light energy loss across the layers.

In an embodiment, the protruding portions 16 on the substrate layer 11 and the protruding portions 16 on the brightness enhancement layer 12 are both non-effective display areas. The fixing portions 15 on the substrate layer 11 and the fixing portions 18 on the brightness enhancement layer 12 are both effective display areas.

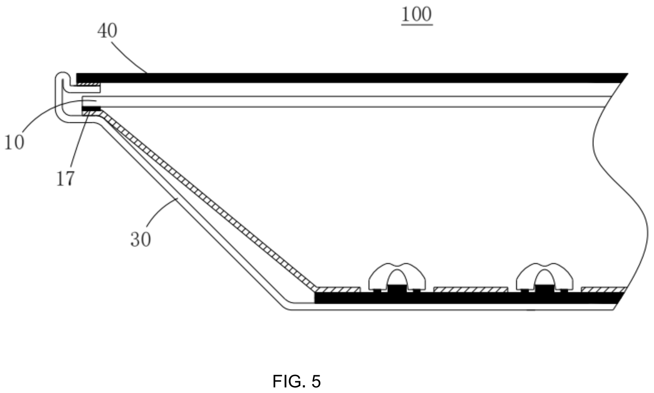

The present application also provides a backlight module 100, as shown in FIG. 5, the backlight module 100 includes a back plate 30 and an optical structure 10. The specific structure of the optical structure 10 refers to the above embodiment, since the present backlight module 100 adopts all the technical solutions of all the above embodiments, it at least has all the beneficial effects brought by the technical solutions of the above embodiments, which will not be described one by one here. Among them, the two sides or surroundings of the optical structure 10 are glued to the back plate 30, and an adhesive 17 is provided between the optical structure 10 and the back plate 30.

Since the diffusion plate and the film of the conventional direct-type backlight module 100 may deviate and move on the back plate 30, so as to scratch the polarizer under the liquid crystal panel 40. Therefore, the two sides or surroundings of the optical structure 10 of the present application are adhered to the back plate 30 by the adhesive 17, so that the substrate layer, the brightness enhancement layer and the diffuser layer of the optical structure 10 are fixed on the back plate 30 and cannot deviate and move, thereby preventing the optical structure 10 from scratching the polarizer under the liquid crystal panel 40.

As shown in FIG. 5, the backlight module 100 further includes a backlight source, which is disposed on the back plate 30. The back plate 30 is provided with a light outlet, and the light emitted by the backlight source is emitted from the light outlet. The optical structure 10 is located at the light outlet and adhered to the back plate 30 .

In an embodiment, double-sided tape or spray glue is attached to the non-effective display area around the optical structure 10. Specifically, double-sided tape or spray glue is attached to the side of the substrate layer away from the protruding portion 16. The substrate layer is adhered to the back plate 30 through the double-sided tape or glue, so that the optical structure 10 is fixed at the light outlet of the back plate 30, thereby limiting the movable gap of the optical structure 10 inside the backlight module 100, thereby achieving the effect of protecting the liquid crystal panel 40.

The present application also provides a display device, which includes an optical structure 10. The display device may be a display screen.

The present application also provides a method for preparing the optical structure 10, which is suitable for preparing the optical structure 10, and includes the following steps:
heating and melting the raw materials containing the basic material;
injecting molten raw materials into the mold 500; the raw materials flow out from the multiple injection ports of the mold 500 from bottom to top, and are injection-molded layer by layer in the cavity of the mold 500 to form a substrate layer 11, a brightness enhancement layer 12, and a diffuser layer 13. The substrate layer 11, the brightness enhancement layer 12, and the diffuser layer 13 in the mold 500 are adhered to each other in a molten state and are integrally formed to form an optical functional board;
cutting and trimming the optical functional plate to form an optical structure 10.

In an embodiment, the raw material containing the basic material can be put into an injection-molding machine. The injection-molding machine heats and pressurizes the raw material, and then the injection-molding machine pours the melted raw material into the mold 500. Then, the substrate layer 11, the brightness enhancement layer 12 and the diffuser layer 13 are injected layer by layer in the mold 500. In the mold 500, the substrate layer 11, the brightness enhancement layer 12 and the diffuser layer 13 in a molten state are adhered to each other and integrally formed due to similar dissolution to form an optical functional board. Among them, the injection-molding temperature is 2000 to 250°C. Then, the mold 500 is pressure-maintained. The pressure-maintaining pressure is 150 to 250Mpa, and the pressure-maintaining time is 6 to 8s. After that, the substrate layer, the brightness enhancement layer and the diffuser layer in the cavity 50 in the mold 500 are cooled, and finally an optical functional board is molded out. The optical functional board can be cut by a cutting mechanism, and then the trimming mechanism is used to trim the cut optical functional board to form an optical structure 10.

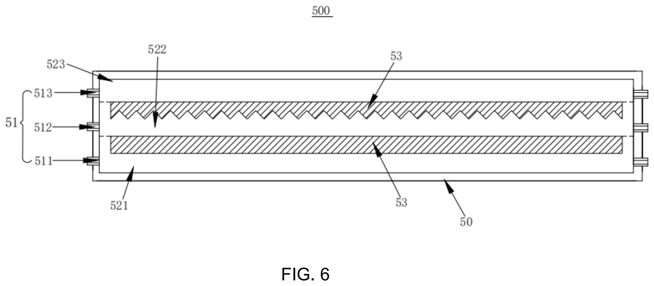

In an embodiment, as shown in FIG. 6, three injection ports 51 are provided at the side of the mold 500 from bottom to top, and the three injection ports 51 are connected to the cavity 50. The two mold cores 53 in the cavity 50 of the mold 500 separate the cavity 50 into three molding grooves, and the three injection ports 51 are provided corresponding to the three molding grooves. Specifically, the injection ports 51 include a first injection port 511, a second injection port 512, and a third injection port 513, and the molding grooves include a first molding groove 521, a second molding groove 522, and a third molding groove 523. The raw materials are injected from the first injection port 511, the second injection port 512, and the third injection port 513 in sequence to inject the substrate layer 11, the brightness enhancement layer 12, and the diffuser layer 13 one by one in the cavity 50. The substrate layer 11, the brightness enhancement layer 12, and the diffuser layer 13 are adhered to each other in a molten state, and are molded after cooling to form an optical functional board.

The steps of injecting molten raw materials into the mold 500, allowing the raw materials to flow out from multiple injection ports of the mold 500 from bottom to top, and injecting and molding the substrate layer 11, the brightness enhancement layer 12, and the diffuser layer 13 layer by layer in the cavity of the mold 500 include:
Under the condition that the substrate layer 11 is injected, a foaming agent is added to foam the substrate layer 11, and the foamed substrate layer 11 is cooled;
Under the condition that the substrate layer 11 is in a molten state, the brightness enhancement layer 12 is injection-molded; the triangular prism structure is transferred to the injection-molded brightness enhancement layer 12, and the brightness enhancement layer 12 after the triangular prism structure being transferred is cooled;
Under the condition that the brightness enhancement layer 12 is in a molten state, a diffusion agent is doped into the molten raw material, and the diffuser layer 13 is injection-molded.

In an embodiment, the raw material is injected from the first injection port 511, and the substrate layer 11 is injection-molded in the first molding groove 521 located at the bottom; then, the raw material is injected from the second injection port 512, and the brightness enhancement layer 12 is injection-molded in the second molding groove 522 located in the middle; thereafter, the raw material containing the basic material is doped with a diffusing agent, and the raw material doped with the diffusing agent is injected from the third injection port 513; the diffuser layer 13 is injection-molded in the third molding groove 523.

In an embodiment, after the raw material is injected from the first injection port 511 , the foaming agent is injected from the first injection port 511, so that the raw material in the first molding groove 521 is foamed to form the substrate layer 11.

After the raw material is injected from the second injection port 512, a mold core 53 having a triangular prism structure 120 in the mold 500 can be pressed downward to transfer the triangular prism structure 120 to the brightness enhancement layer 12 in the second molding groove 522, so that the side of the brightness enhancement layer 12 facing away from the substrate layer 11 has the triangular prism structure 120.

The present application also provides a mold 500 for preparing an optical structure 10, which is used to prepare the optical structure 10. The mold 500 is provided with a cavity 50 and a plurality of injection ports 51. The plurality of injection ports 51 are sequentially provided from bottom to top in the mold 500 and connected to the cavity 50.

As shown in FIG. 6, at least three injection ports 51 are provided at the side of the mold 500, and the three injection ports 51 are provided from bottom to top; the two mold cores 53 in the cavity 50 separate the cavity 50 into three molding grooves, and the three injection ports 51 are provided corresponding to the three molding grooves. Specifically, the injection ports 51 include a first injection port 511, a second injection port 512, and a third injection port 513, and the molding grooves include a first molding groove 521, a second molding groove 522, and a third molding groove 523. The first injection port 511 is connected to the first molding groove 521; the second injection port 512 is connected to the second molding groove 522; the third injection port 513 is connected to the third molding groove 523.

As shown in FIG. 6, the interior of the cavity 50 of the mold 500 is concave, and the outer edge of the cavity 50 is convex.

In an embodiment, the first molding groove 521 and the second molding groove 522 are both in a square structure, concave in the middle and high around. So that the substrate layer and the brightness enhancement layer formed in the first molding groove 521 and the second molding groove 522 can be in a square shape. The protruding structure of the substrate layer 11 is the protruding portion 16, and the substrate layer 11 is adhered to the bottom of the brightness enhancement layer 12 through the protruding portion 16. Similarly, the protruding structure of the brightness enhancement layer 12 is the protruding portion 16, and the brightness enhancement layer 12 is adhered to the bottom of the diffuser layer 13 through the protruding portion 16.

During the injection-molding process, the raw material is injected from the first injection port 511, and the substrate layer 11 is injection-molded in the first molding groove 521 located at the bottom; then, the raw material is injected from the second injection port 512, and the brightness enhancement layer 12 is injection-molded in the second molding groove 522 located in the middle; thereafter, the raw material containing the basic material is doped with the diffusing agent, and the raw material doped with the diffusing agent is injected from the third injection port 513, and the diffuser layer 13 is injection-molded in the third molding groove 523.

The above descriptions are only some embodiments of the present application, and does not limit the patent scope of the present application. All equivalent structural transformations made by configuring the contents of the present application specification and drawings under the technical concept of the present application, or directly/indirectly applied in other related technical fields, are included in the patent protection scope of the present application.

## Claims

1. An optical structure, applied to a backlight module, **characterized by** comprising:
a substrate layer;
a brightness enhancement layer; and
a diffuser layer;
wherein an air gap is provided between the substrate layer and the brightness enhancement layer, and between the brightness enhancement layer and the diffuser layer; the substrate layer, the brightness enhancement layer and the diffuser layer are made of same basic material and are integrally injection-molded.

2. The optical structure according to claim 1, wherein the basic material is polystyrene (PS) material, polycarbonate (PC) material, polyacrylate organic-inorganic nanocomposite (MS) material or polymethyl methacrylate (PMMA) material.

3. The optical structure according to claim 1, wherein the optical structure comprises the substrate layer, the brightness enhancement layer, and the diffuser layer in order from a light incident surface to a light exit surface, and the air gap of 0.2 mm is provided between the substrate layer and the brightness enhancement layer, and between the brightness enhancement layer and the diffuser layer.

4. The optical structure according to claim 1, wherein a multi-layer non-continuous bubble structure is provided in the substrate layer, and a refractive index of the substrate layer is 1.5 to 1.6.

5. The optical structure according to claim 4, wherein the substrate layer is a transparent structure, and a thickness of the substrate layer is between 0.5 mm and 1.0 mm.

6. The optical structure according to claim 1, wherein the brightness enhancement layer is a transparent layer; a light incident surface of the brightness enhancement layer is smooth; and a light exit surface of the brightness enhancement layer is set to a triangular prism structure.

7. The optical structure according to claim 6, wherein a thickness of the brightness enhancement layer is between 0.2 mm and 0.5 mm.

8. The optical structure according to claim 1, wherein the diffuser layer is a semi-transparent plate, and the basic material of the diffuser layer is doped with a light diffusing agent.

9. The optical structure according to claim 8, wherein the diffusing agent comprises SiO₂ and TiO₂, and a mass ratio of the diffusing agent is 1% to 5%.

10. The optical structure according to claim 8, wherein a thickness of the diffuser layer is between 0.2 mm and 0.5 mm.

11. The optical structure according to any one of claims 1 to 10, wherein the substrate layer and the brightness enhancement layer both comprise a fixing portion and a protruding portion; the protruding portion is provided to protrude relative to the fixing portion, and two adjacent protruding portions are adhered to each other.

12. The optical structure according to claim 11, wherein the protruding portion is provided at both sides or around the fixing portion, and the air gap is located between two adjacent fixing layers.

13. A backlight module, **characterized by** comprising: the optical structure according to any one of claims 1 to 12.

14. A display device, **characterized by** comprising: the optical structure according to any one of claims 1 to 12.

15. A method for preparing an optical structure, applied to preparing the optical structure according to any one of claims 1 to 12, **characterized by** comprising:
heating and melting raw materials containing the basic material;
injecting molten raw materials into a mold; wherein the raw materials flow out from multiple injection ports of the mold from bottom to top, and a substrate layer, a brightness enhancement layer and a diffuser layer layer are injection-molded layer by layer in a cavity of the mold; the substrate layer, the brightness enhancement layer and the diffuser layer in the mold are mutually adhered and integrally molded in a molten state to form an optical functional board;
wherein, under a condition that the substrate layer is injection-molded, a foaming agent is added to foam the substrate layer, and the foamed substrate layer is cooled;
under a condition that the substrate layer is in the molten state, the brightness enhancement layer is injection-molded; a triangular prism structure is transferred to the injection-molded brightness enhancement layer, and the brightness enhancement layer after the triangular prism structure being transferred is cooled;
under a condition that the brightness enhancement layer is in the molten state, a diffusion agent is doped on the molten raw materials, and the diffuser layer is injection-molded;
cutting and trimming the optical functional plate to form the optical structure.
